# EUROPÄISCHE PATENTSCHRIFT

(11) **EP 0 944 776 B1**
(45) Veröffentlichungstag und Bekanntmachung des Hinweises auf die Patenterteilung: **19.03.2003**
(21) Anmeldenummer: 97953884.0
(22) Anmeldetag: 19.12.1997
(51) Int. Cl.: F16D 25/08

(54) **REIBUNGSKUPPLUNG**
FRICTION CLUTCH
EMBRAYAGE A FRICTION

(30) Priorität: 19.12.1996 DE 19652776
(43) Veröffentlichungstag der Anmeldung: 29.09.1999
(73) Patentinhaber: Volkswagen Aktiengesellschaft, 38436 Wolfsburg (DE); LuK Lamellen und Kupplungsbau Beteiligungs KG, 77813 Bühl (DE)
(72) Erfinder: HERZIG, Stefan, D-38547 Calberlah (DE); OSTERLÄNGER, Jürgen, D-91448 Emskirchen (DE); MIERSCH, Rainer, D-38471 Rühen (DE)
(86) Internationale Anmeldenummer: EP9707187
(87) Internationale Veröffentlichungsnummer: WO98027350

(56) Entgegenhaltungen:
- DE-A- 4 120 643
- GB-A- 2 164 494
- GB-A- 2 174 169
- US-A- 4 705 151
- US-A- 4 867 294

## Beschreibung

Die Erfindung betrifft eine Reibungskupplung für Kraftfahrzeuge mit einer zwischen Bauteilen einspannbaren Kupplungsscheibe, die drehfest auf einer Getriebewelle sitzt, einer Kupplungsfeder zum Einspannen der Kupplungsscheibe zwischen den beiden Bauteilen, einer Kupplungsbetätigungseinrichtung mit einer kupplungsnahen Nehmereinrichtung, einer kupplungsfemen Gebereinrichtung sowie einer dazwischen angeordneten Übertragungseinrichtung, wobei die kupplungsnahe Nehmereinrichtung ein feststehendes konzentrisch zu der Getriebewelle angeordnetes Gehäuse mit einem radial innenliegenden axialen Fortsatz und einem radial außenliegenden axialen Fortsatz, die konzentrisch zueinander einen Ringraum bildend angeordnet sind, aufweist, und einem in dem Ringraum bewegbaren und mit der Kupplungsscheibe kraftschlüssig in Verbindung stehenden Kolben, wobei dem Gehäuse ein Wegsensor zugeordnet ist, der in dem radial außenliegenden axialen Fortsatz angeordnet ist.

Eine ähnliche Reibungskupplung ist z. B. in der deutschen Offenlegungsschrift DE 41 20 643 A1 beschrieben. In dem dortigen Nehmerzylinder ist ein Wegsensor mit einem veränderlichen Widerstand, einer veränderlichen Kapazität oder einer veränderlichen Induktion vorgesehen. Die Funktion der Wegsensoren kann durch Verunreinigungen, wie z. B. durch Bestandteile des Kupplungsreibbelages oder aus dem Motorraum heraustretendes Öl beeinträchtigt werden.

In der US-Patentschrift 4,705,151 ist ebenfalls ein Nehmerzylinder einer Nehmereinrichtung beschrieben, der einen Wegsensor mit einer veränderlichen Induktivität, Kapazität, Widerstand oder Induktion aufweist. Der dort beschriebene Wegsensor ist jedoch lediglich dazu vorgesehen, eine Extremstellung des Kolbens anzuzeigen. Die Messung der Stellung des Kolbens über den gesamten Verschiebeweg ist mit einem derartigen Wegsensor nicht möglich.

Aufgabe der Erfindung ist es, eine Möglichkeit zu schaffen, mit der die Stellung eines Kolbens in einem feststehenden Nehmerzylinder einer kupplungsnahen Nehmereinrichtung zur Betätigung einer Reibungskupplung möglichst unabhängig von Meßsignale verfälschenden Einflüssen wie Verschmutzung, Erschütterungen oder Einflüsse durch benachbarte Bauteile, sensiert werden kann.

Die Aufgabe wird erfindungsgemäß durch die Merkmale des Anspruchs 1 gelöst. Vorteilhafte Aus- und Weiterbildungen sind in den Unteransprüchen gegeben.

Die erfindungsgemäße Reibungskupplung ist somit insbesondere dadurch gekennzeichnet, daß der radial außenliegende axiale Fortsatz des Gehäuses wenigstens im Bereich zwischen dem Wegsensor und dem Kolben amagnetisch ausgebildet ist. Hierdurch wird erreicht, daß das von dem Wegsensor sensierte Signal nicht durch den radial außenliegenden axialen Fortsatz des Gehäuses verfälscht wird.

Der Wegsensor ist vorteilhafterweise länglich und im wesentlichen parallel zu dem Verschiebeweg des Kolbens ausgebildet. Hierdurch wird sichergestellt, daß die Verschiebung des Kolbens und damit die axiale Ausrückbewegung der axial bewegbaren Reibungskupplungshälfte die Ursache für das Meßsignal ist und andere Bewegungen wie z. B. Erschütterungen einen nur sehr geringen Einfluß auf das Meßsignal haben.

Femer wird vorgeschlagen, daß der Kolben aus einem nichtferromagnetischen elektrisch leitfähigen Metall besteht oder zumindest nichtferromagnetische elektrisch leitfähige metallische Bestandteile enthält oder mit diesen in fester Verbindung steht. Durch die Bewegung des Kolbens wird in dem nichtferromagnetischen elektrisch leitfähigen Metall ein Wirbelstrom induziert, durch den die Induktivität des Wegsensors verändert wird. Der Wegsensor ist Bestandteil eines Schwingkreises bestehend aus einer Kapazität und einer Induktivität. Durch die Veränderung der Induktivität des Wegsensors wird die an der Spule anliegende Wechselspannung und damit die Resonanzfrequenz des Schwingkreises verändert. Die Veränderung der Resonanzfrequenz dient dann als Meßsignal für den Verschiebeweg des Kolbens. Bei einer derartigen Sensoranordnung muß lediglich der Wegsensor mit einem elektrischen Kabel verbunden werden, der Kolben selbst muß nicht mit einem elektrischen Kabel verbunden werden. Die Verbindung eines bewegten Teiles mit einem Kabel ist somit nicht erforderlich.

Eventuell benachbart vorhandene ferromagnetische Bauteile, wie z. B. die Getriebewelle oder andere Teile, haben auf das Meßsignal keinen Einfluß. Die magnetische Permeabilität µᵣ von ferromagnetischen Bauteilen ist wesentlich größer als 1, aus diesem Grunde sind die in den ferromagnetischen Bauteilen induzierten Wirbelströme gegenüber den Wirbelströmen in den nichtferromagnetischen Bauteilen mit einer magnetischen Permeabilität von µᵣ ungefähr 1 vernachlässigbar. Erschütterungen oder Verunreinigungen haben, wie sich aus Versuchen ergeben hat, keinen Einfluß auf das Meßergebnis.

Besonders vorteilhaft ist es, wenn das nichtferromagnetisch elektrisch leitfähige Metall Aluminium ist. Aluminium hat den Vorteil, daß es einen besonders geringen elektrischen Widerstand hat und besonders leicht ist. Durch die gute elektrische Leitfähigkeit wird ein besonders gutes Meßsignal erreicht. Das geringe Gewicht des Werkstoffes ist in sofern vorteilhaft, als daß möglichst wenig Masse bei einer Ausrückbewegung bewegt werden muß.

Weiterhin wird vorgeschlagen, daß der Wegsensor ein Sensorspulenkabel ist, wobei in dem radial außenliegenden axialen Fortsatz des Gehäuses axiale Bohrungen vorgesehen sind und an den stirnseitigen Enden des radial außenliegenden axialen Fortsatzes jeweils ein ringförmiger Freiraum vorgesehen ist, und wobei das Sensorspulenkabel durch Wickeln in den axialen Bohrungen und den Freiräumen angeordnet ist. Im Anschluß an das Wickeln werden die Bohrungen und die Freiräume vorzugsweise druckdicht vergossen. Dadurch wird der Wegssensor sicher vor Verschmutzungen geschützt.

Die Erfindung wird im folgenden anhand eines Ausführungsbeispiels näher erläutert. In den Zeichnungen zeigen:
- Figur 1: eine Prinzipdarstellung einer fluidbetätigten Reibungskupplung; und
- Figur 2: eine kupplungsnahe Nehmereinrichtung mit radial außenliegendem Wegsensor.

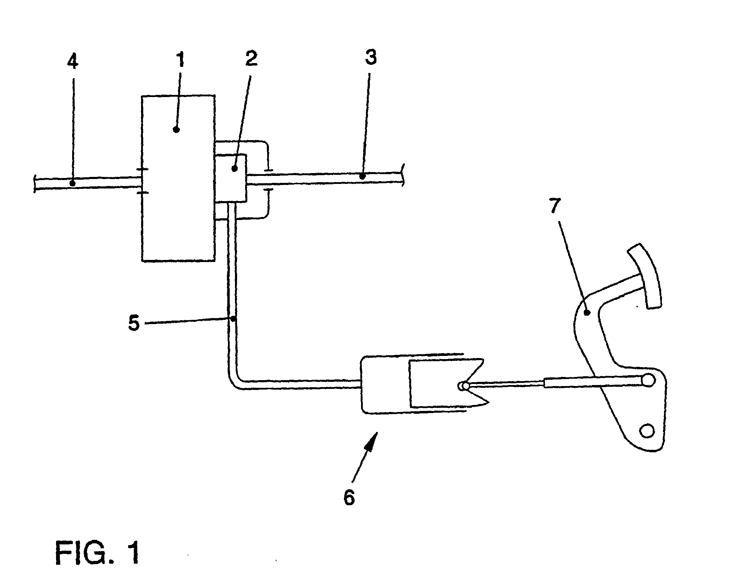

Figur 1 zeigt den prinzipiellen Aufbau einer fluidbetätigten Reibungskupplung. Ausgehend von einem Kupplungspedal 7 wird direkt ein Geberzylinder 6 beaufschlagt, der über eine Druckleitung 5 mit der in der Reibungskupplung 1 angeordneten Nehmereinrichtung 2 in Verbindung steht. Die Nehmereinrichtung 2 ist fest mit dem Gehäuse der Reibungskupplung 1 verbunden, und weist einen durch das Gehäuse 8 und die Führungshülse 9 gebildeten ringförmigen Nehmerzylinder mit dem Druckraum 13 und einen den Druckraum 13 verschließenden und in dem Nehmerzylinder bewegbaren Kolben 11 auf.

Durch Beaufschlagen der Nehmereinrichtung 2 mit Fluid wird es ermöglicht, die Reibungskupplung 1 zu öffnen bzw. zu schließen und dadurch die Kraftübertragung von der Kurbelwelle 4 auf die Getriebewelle 3 zu unterbrechen.

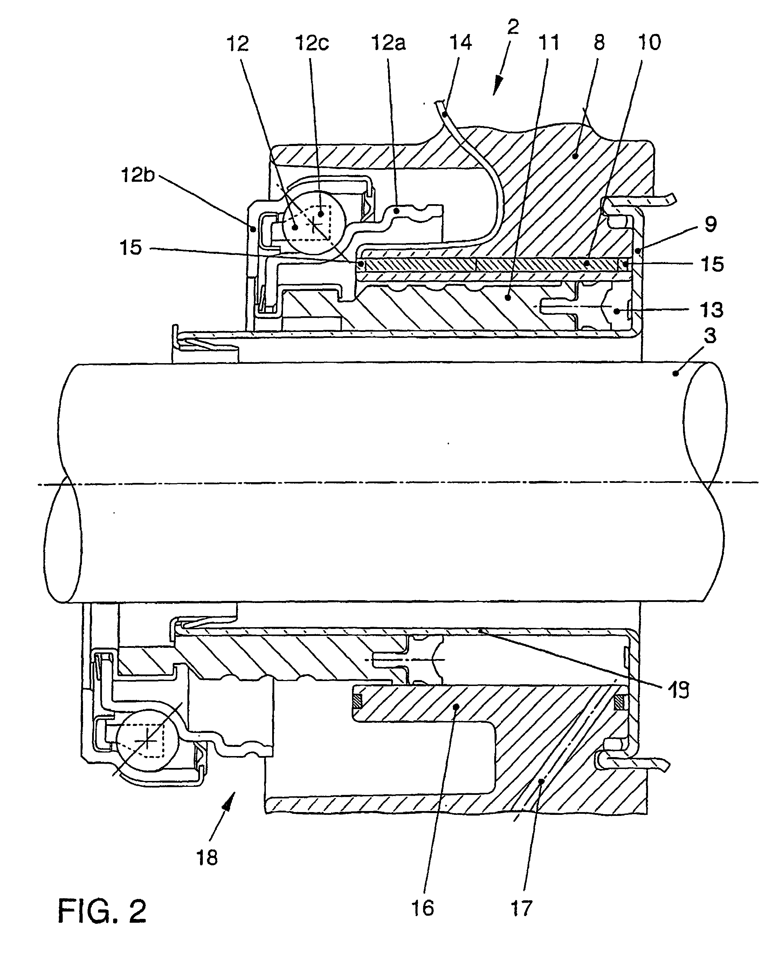

In Figur 2 ist eine Nehmereinrichtung 2 in Schnittdarstellung zu erkennen, wobei oberhalb der Symmetrielinie die Nehmereinrichtung 2 im eingerückten Zustand und unterhalb der Symmetrielinie im ausgerückten Zustand zu erkennen ist.

Die Nehmereinrichtung 2 ist konzentrisch zu der Getriebewelle 3 angeordnet. Die Nehmereinrichtung 2 besteht aus dem Nehmerzylinder, gebildet durch das Gehäuse 8 und die Führungshülse 9, und einer zu dem Nehmerzylinder bewegbaren Ausrückeinheit 18. In dem Gehäuse 8 ist eine Bohrung 17 vorgesehen, die an ihrem einen Ende mit der Druckleitung 5 in Verbindung steht und mit dem anderen Ende in den Druckraum 13 mündet.

Die Ausrückeinheit 18 besteht aus einem Kolben 11 und einem Ausrücklager 12. Der Kolben 11 liegt axial an der nicht umlaufenden Lagerhälfte 12a an. Die umlaufende Lagerhälfte 12b steht in kraftschlüssiger Verbindung mit einer nicht dargestellten ausrückbaren Reibungskupplungshälfte.

Der Druckraum 13 wird gebildet durch die Führungshülse 9 und den axialen Fortsatz 16 des Gehäuses 8. Verschlossen wird der Druckraum 13 durch den bewegbaren Kolben 11. Selbstverständlich können die Führungshülse 9 und das Gehäuse 8 auch einteilig ausgebildet sein.

Wird das Kupplungspedal 7 betätigt, dann wird ein Druck über den Geberzylinder 6 und die Druckleitung 5 und die Bohrung 17 in dem Druckraum 13 aufgebracht. Der Kolben 11 wird daraufhin in die ausgerückte Stellung, wie unterhalb der Symmetrielinie dargestellt, bewegt. Die Bewegung des Kolbens 11 wird dann über die Lagerhälfte 12a, die Lagerkörper 12c und die Lagerhälfte 12b auf die ausrückbare nicht dargestellte Reibungskupplungshälfte übertragen, und dadurch der Kraftfluß von der Kurbelwelle 4 auf die Getriebewelle 3 unterbrochen.

Dem Gehäuse 8 ist ein sich im wesentlichen über den gesamten Verschiebeweg des Kolbens 11 erstreckender Wegsensor 10 zugeordnet.

Der Wegsensor 10 ist aus einem nicht dargestellten Sensorspulenkabel gebildet, an dem eine Wechselspannung anliegt. Durch die anliegende Wechselspannung ist der Wegsensor 10 umgeben von einem elektrischen Wechselfeld. Das Kabel 14 verbindet den Wegsensor 10 mit einer außerhalb der Nehmereinrichtung 2 angeordneten elektrischen Einrichtung zum Auswerten des Meßsignals. Das Kabel 14 kann selbstverständlich mehrere Leitungsstränge enthalten.

In dem Gehäuse 8 sind in Richtung des Verschiebeweges des Kolbens 11 gerichtete Bohrungen vorgesehen, in denen das Sensorspulenkabel angeordnet ist. An den axialen Stirnseiten des Gehäuses 8 sind Freiräume 15 vorgesehen, in denen das Sensorspulenkabel ebenfalls durch Wickeln angeordnet ist. Nach dem Wickeln werden die Freiräume druckdicht vergossen. Das Sensorkabel ist somit sicher vor Verunreinigungen, Korrosion oder ähnlichem geschützt.

Der Kolben 11 besteht aus einem nichtferromagnetischen elektrisch leitenden Metall oder weist zumindest nicht ferromagnetische elektrisch leitfähige metallische Bestandteile auf oder steht mit diesen in fester Verbindung. Durch die Bewegung des Kolbens 11 senkrecht zu dem Wechselfeld wird in dem Kolben 11 ein Wirbelstrom induziert. Nichtferromagnetisch elektrisch leitfähige Metalle weisen eine magnetische Permeabilität µᵣ von ungefähr 1 auf. Ferromagnetisch leitfähige Metalle weisen dagegen eine magnetische Permeabilität von µᵣ wesentlich größer als 1 auf. Die induzierten Wirbelströme z. B. in der Getriebewelle 3 können deswegen im Vergleich zu den induzierten Wirbelströmen in dem Kolben 11 vernachlässigt werden. Die genauen Hintergründe über den Einfluß der magnetischen Permeabilität auf die induzierten Wirbelströme sind z. B. nachzulesen in VDI Fortschrittberichte, Reihe 8; Meß-, Steuerung- und Regelungstechnik, Nr. 557; Trennung der Einflußgrößen von Wirbelstromsensoren durch Signalverarbeitung mit Hilfe von Felduntersuchung und Modellierung, von M.Sc. Yunqiang Wang, Kassel.

Der induzierte Wirbelstrom in dem Kolben 11 wirkt nach der Lenz'schen Regel dem elektrischen Wechselfeld entgegen und verändert dadurch die Induktivität des Wegsensors 10 und damit die an ihm anliegende Wechselspannung.

Als Meßsignal dient dann die Veränderung der Wechselspannung, oder wenn der Wegsensor in einem elektrischen Schwingkreis mit einer Kapazität angeordnet ist, die Veränderung der Resonanzfrequenz des Schwingkreises.

## Patentansprüche

1. Reibungskupplung (1) für Kraftfahrzeuge mit einer zwischen Bauteilen einspannbaren Kupplungsscheibe, die drehfest auf einer Getriebewelle (3) sitzt, einer Kupplungsfeder zum Einspannen der Kupplungsscheibe zwischen den beiden Bauteilen, einer Kupplungsbetätigungseinrichtung mit einer kupplungsnahen Nehmereinrichtung (2), einer kupplungsfernen Gebereinrichtung sowie einer dazwischen angeordneten Übertragungseinrichtung, wobei die kupplungsnahe Nehmereinrichtung (2) ein feststehendes ringförmiges Gehäuse (8) mit einem radial innenliegenden axialen Fortsatz (19) und einem radial außenliegenden axialen Fortsatz (16), die konzentrisch zueinander einen Ringraum (13) bildend angeordnet sind, aufweist, und einem in dem Ringraum (13) bewegbaren und kraftschlüssig mit der Kupplungsscheibe in Verbindung stehenden Kolben (11), wobei dem Gehäuse (8) ein Wegsensor (10) zugeordnet ist, der in dem radial außenliegenden axialen Fortsatz (16) angeordnet ist, **dadurch gekennzeichnet, daß** der radial außenliegende axiale Fortsatz (16) wenigstens im Bereich zwischen dem Wegsensor (10) und dem Kolben (11) amagnetisch ist.

2. Reibungskupplung nach Anspruch 1, **dadurch gekennzeichnet, daß** der Wegsensor (10) länglich ausgebildet ist und im wesentlichen parallel zu dem Verschiebeweg des Kolbens (11) angeordnet ist.

3. Reibungskupplung nach Anspruch 1 oder 2, **dadurch gekennzeichnet, daß** der Kolben (11) aus einem nicht ferromagnetischen elektrisch leitfähigen Metall besteht oder zumindest nicht ferromagnetisch elektrisch leitfähige metallische Bestandteile enthält oder mit diesen in fester Verbindung steht.

4. Reibungskupplung nach Anspruch 3, **dadurch gekennzeichnet, daß** das Metall Aluminium ist.

5. Reibungskupplung nach einem der Ansprüche 1 bis 4, **dadurch gekennzeichnet, daß** der radial innenliegende axiale Fortsatz (19) und der radial außenliegende axiale Fortsatz (16) getrennte Bauteile sind.

6. Reibungskupplung nach einem der Ansprüche 1 bis 5, **dadurch gekennzeichnet, daß** der Wegsensor (10) aus einer veränderlichen Induktivität besteht.

7. Reibungskupplung nach einem der Ansprüche 1 bis 6, **dadurch gekennzeichnet, daß** der Wegsensor (10) ein Sensorspulenkabel ist, wobei in dem radial außenliegenden axialen Fortsatz (16) axiale Bohrungen vorgesehen sind und an den stimseitigen Enden des radial außenliegenden axialen Fortsatzes (16) jeweils ein ringförmiger Freiraum (15) vorgesehen ist, und wobei das Sensorspulenkabel durch Wickeln in den axialen Bohrungen und den Freiräumen (15) angeordnet ist.

8. Reibungskupplung nach Anspruch 7, **dadurch gekennzeichnet, daß** die Bohrungen und die Freiräume (15) im Anschluß an das Wickeln druckdicht vergossen sind.

## Claims

1. Friction clutch (1) for motor vehicles, with a clutch disc which is capable of being clamped between components and is seated fixedly in terms of rotation on a transmission shaft (3), with a clutch spring for clamping the clutch disc between the two components, with a clutch actuation device having a near-clutch slave device (2), a clutch-distant master device and a transmission device arranged between them, the near-clutch slave device (2) having a fixed annular housing (8) with a radially inner axial extension (19) and with a radially outer axial extension (16), which are arranged concentrically to one another so as to form an annular space (13), and with a piston (11) movable in the annular space (13) and connected non-positively to the clutch disc, the housing (8) being assigned a displacement sensor (10) which is arranged in the radially outer axial extension (16), **characterized in that** the radially outer axial extension (16) is nonmagnetic at least in the region between the displacement sensor (10) and the piston (11).

2. Friction clutch according to Claim 1, **characterized in that** the displacement sensor (10) is of elongate design and is arranged essentially parallel to the displacement path of the piston (11).

3. Friction clutch according to Claim 1 or 2, **characterized in that** the piston (11) consists of a non-ferromagnetic electrically conductive metal or at least contains non-ferromagnetic electrically conductive metallic constituents or is solidly connected to these.

4. Friction clutch according to Claim 3, **characterized in that** the metal is aluminium.

5. Friction clutch according to one of Claims 1 to 4, **characterized in that** the radially inner axial extension (19) and the radially outer axial extension (16) are separate components.

6. Friction clutch according to one of Claims 1 to 5, **characterized in that** the displacement sensor (10) consists of a variable inductance.

7. Friction clutch according to one of Claims 1 to 6, **characterized in that** the displacement sensor (10) is a sensor coil cable, axial bores being provided in the radially outer axial extension (16), and an annular free space (15) being provided in each case on the end faces of the radially outer axial extension (16), and the sensor coil cable being arranged by winding in the axial bores and the free spaces (15).

8. Friction clutch according to Claim 7, **characterized in that** the bores and the free spaces (15) are sealed in, pressure-tight, after winding.

## Revendications

1. Embrayage à friction (1) pour véhicules automobiles comprenant un disque d'embrayage pouvant être serré entre deux composants, lequel repose fixe en rotation sur un arbre de transmission (3), un ressort d'embrayage pour serrer le disque d'embrayage entre les deux composants, un dispositif d'actionnement de l'embrayage avec un dispositif récepteur (2) proche de l'embrayage, un dispositif donneur éloigné de l'embrayage ainsi qu'un dispositif de transmission disposé entre eux, le dispositif récepteur (2) proche de l'embrayage présentant un carter annulaire fixe (8) avec une saillie axiale radialement interne (19) et une saillie axiale radialement externe (16), qui sont disposées de manière concentrique l'une à l'autre en formant un espace annulaire (13), et un piston (11) déplaçable dans l'espace annulaire (13) et en liaison par adhérence avec le disque d'embrayage, un capteur de position (10) étant associé au carter (8) et étant disposé dans la saillie axiale radialement externe (16), **caractérisé en ce que** la saillie axiale radialement externe (16) est non magnétique au moins dans la région comprise entre le capteur de position (10) et le piston (11).

2. Embrayage à friction selon la revendication 1, **caractérisé en ce que** le capteur de position (10) est réalisé longitudinalement et est disposé essentiellement parallèlement à la course de déplacement du piston (11).

3. Embrayage à friction selon la revendication 1 ou 2, **caractérisé en ce que** le piston (11) se compose d'un matériau conducteur de l'électricité non ferromagnétique ou contient au moins des composants métalliques conducteurs de l'électricité non ferromagnétiques, ou est connecté fermement à ceux-ci.

4. Embrayage à friction selon la revendication 3, **caractérisé en ce que** le métal est de l'aluminium.

5. Embrayage à friction selon l'une quelconque des revendications 1 à 4, **caractérisé en ce que** la saillie axiale radialement interne (19) et la saillie axiale radialement externe (16) sont des composants séparés.

6. Embrayage à friction selon l'une quelconque des revendications 1 à 5, **caractérisé en ce que** le capteur de position (10) se compose d'une inductance variable.

7. Embrayage à friction selon l'une quelconque des revendications 1 à 6, **caractérisé en ce que** le capteur de position (10) est un câble de bobine de capteur, des alésages axiaux étant prévus dans la saillie axiale radialement externe (16) et un espace libre annulaire (15) étant prévu à chaque fois sur les extrémités frontales de la saillie axiale radialement externe (16), et le câble de bobine de capteur étant disposé par bobinage dans les alésages axiaux et les espaces libres (15).

8. Embrayage à friction selon la revendication 7, **caractérisé en ce que** les alésages et les espaces libres (15) sont scellés de manière étanche à la pression à la suite du bobinage.
